# EUROPEAN PATENT APPLICATION

(11) **EP 1 863 221 A1**
(43) Date of publication of application: **05.12.2007**
(21) Application number: 06010963.4
(22) Date of filing: 29.05.2006
(51) Int. Cl.: H04L 12/24

(54) **Method and apparatus for synchronizing a network manager and a network element**

(71) Applicant: NOKIA SIEMENS NETWORKS GMBH & CO. KG, 81541 München (DE)
(72) Inventor: Abrams, Adams, Shilat 73188 (IL)
(74) Representative: Fischer, Michael

(57) **Abstract**

In order to reduce network traffic and processing resources in a network that is administrated by a SNMP network manager (M), a method for synchronizing a network manager (NM) with a network element (NE) is presented. The method involves the calculating of a first checksum (CS) of at least a subset of a plurality of entries (E11, E12, E13, E21, E22, E31, E32, E33) in the management information base (MIB) of the network element. A second checksum (CS') for the mirrored entries (E11', E12', E13', E21', E22', E31', E32', E33') representing the same settings as used for the first checksum (CS) in the network manager (NM) is calculated. The first checksum (CS) is then compared with the second checksum (CS'). If the first checksum (CS) and the second checksum (CS') indicate a difference, the network manager (NM) is updated with the entries used for the calculation of the first checksum (CS).

## Description

The invention relates to the technical field of network administration, in particular to the synchronizing of a network manager and a network element according to claim 1, claim 2 and claim 10.

In order to administrate a data network, at least one network manager is usually used in order to configure and update network elements like e.g. routers, servers, switches, clients, computers and other network tools. In order to be able to administrate the network, the network manager has to know the current status of the settings. This can be done by reporting any change in the network element configuration to the network manager. In order to gain further reliability, the network element can also be polled by the network manager in periodic intervals. In order to keep up to date, the network manager and the network element are usually synchronized upon request, upon a change in the network element and also in periodic intervals.

The most common way for managing data networks nowadays is by the simple network management protocol (SNMP) as defined by the Internet Engineering Task Force. In order to achieve synchronization between the SNMP manager and the SNMP agent, all information is initially polled with large data entities (typically 10 Kilobytes or larger) for the more complex network elements. When any changes occur, the network element uses a trap to initiate an update of the SNMP manager's database (also called management information base). In order to additionally assure reliability, partial synchronization procedures are performed periodically, usually by polling the network equipment by the network manager. This way the integrity of the cached network equipment image in the SNMP manager can be verified on a regular basis. Whenever discrepancies (e.g. a missed trap or disconnection) are detected, a major polling operation is initiated and the network manager polls that network equipment for any updates.

Nowadays network elements often comprise a large number of settings. Especially in large networks with a large number of network elements the network management results in a heavy communication and computation burden on the network manager, the network element and on the network.

It is therefore the objective of this invention to reduce the use of resources.

This objective is achieved according to the present invention by the measures taken according to anyone of the claims 1, 2 and 10.

The method for synchronizing a network manager and a network element involves a network element and a network manager. The network element comprises a network element data memory and the network manager comprises a network manager data memory. The network element data memory comprises a plurality of variable entries, which represent a plurality of settings of the network element. The network manager data memory also comprises a plurality of variable entries, which represent a logical copy of at least one subset of the plurality of variable entries of the network-element data memory.

The method further comprises the calculating of a first checksum for the subset of the plurality of entries of the network element data memory and the calculating of a second checksum for the corresponding subset of entries of the network manager data memory. By comparing the first checksum with the second checksum, it is possible to detect different entries in the network manager database and in the network element database. In case the first checksum and the second checksum indicate a difference the network manager data memory is updated with the entries used for the calculation of the first checksum.

This way the data traffic in the network can be reduced. For the functioning of the invention, it does not matter where an instance for comparing the first and the second checksum is located in the network. However, in a preferred embodiment the two checksums are compared in the network manager. Therefore the first checksum is transmitted to the network manager. In another preferred embodiment the second checksum is transferred to the network element, where the first checksum and the second checksum are compared. In another preferred embodiment, the two checksums are transferred to a network node and compared there. The network node sends the result of the comparing step to the network manager. Upon receipt of the result, the network manager decides if the network manager database shall be updated.

Alternatively, the objective mentioned above is achievable by another advantageous way of efficiently synchronizing a network manager and a network element, that can be performed by
a) calculating a first checksum of at least a subset of the plurality of entries of the network element data memory at a first time;
b) calculating a second checksum at a second time for the entries in the network element data memory that were used for calculating the first checksum;
c) comparing the first checksum with the second checksum;
d) updating the network manager data memory with the entries used for the calculation of the second checksum in case the first checksum and the second checksum indicate a difference.

In case the first checksum and the second checksum are different, this indicates that settings of the network element have been changed. Also for this embodiment, it does not matter where an instance for comparing the first checksum and the second checksum is located in the network, since transmitting only checksums requires usually not a lot of network bandwidth. Again, in a preferred embodiment the two checksums are transmitted to and compared by the network manager.

In a preferred embodiment, the first checksum is a partial checksum of a first test checksum and the second checksum is a partial checksum of a second test checksum. That means that the entries that were used for calculating the first checksum are a subset of the entries that were used for calculating the first test checksum. Analogously, the entries that were used for calculating the second checksum are a subset of the entries that were used for calculating the second test checksum. The entries of the first test checksum correspond to the entries of the second test checksum. By comparing the first test checksum with the second test checksum, a larger number of entries in the network element data memory can be probed for detecting any change. In case the test checksums are different, partial checksums can be used, in order to localize the different entries more precisely.

In a preferred embodiment, the method is performed periodically or in another predetermined manner. This gives additional security for consistence of the network element's and the network manager's databases.

In another preferred embodiment the network element comprises an SNMP agent and the network manager comprises an SNMP manager, whereas the entries that were used for calculating the first checksum and/or the entries that were used for calculating the first test checksum are comprised in a management information base of the SNMP agent.

In another preferred embodiment the first checksum or the first test checksum is a checksum for all entries in the network element data memory. This makes it possible to detect any change in the network element with only one checksum.

In another preferred embodiment, the network element data memory comprises a structure of at least one table or a group of tables. This makes it easier to calculate checksums that do not cover the whole network element data memory, since a checksum, especially a partial checksum can be calculated for a group of tables, for only one table or even only for a part of a table.

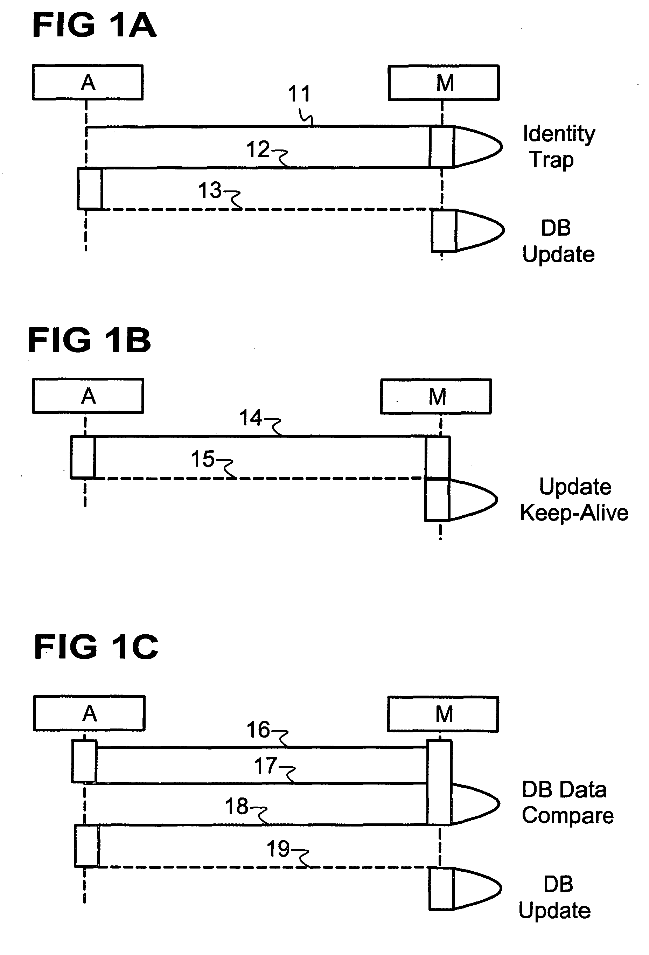

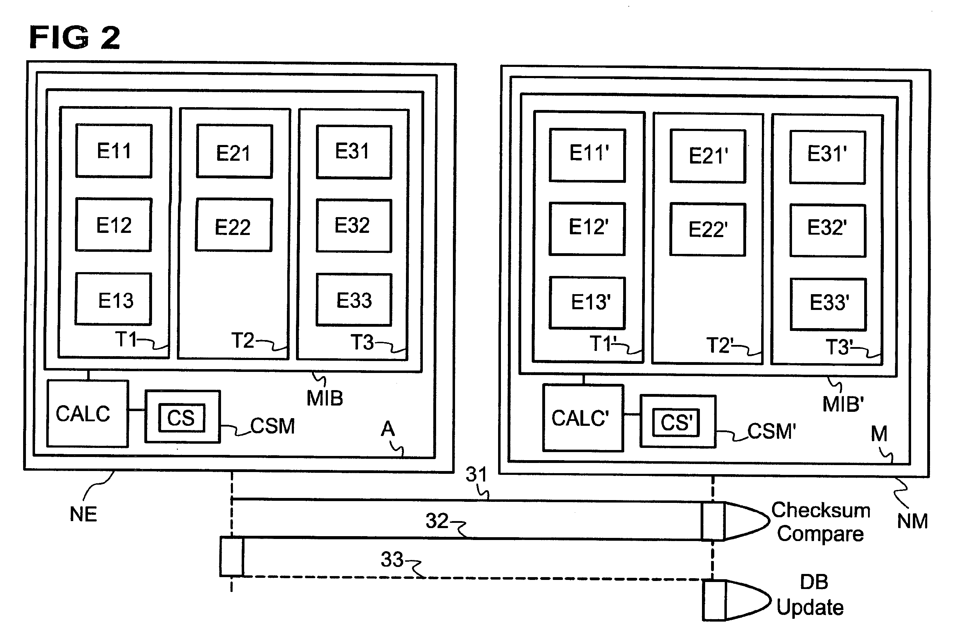

The invention will in the following be described in preferred but not exclusive embodiments with reference to the accompanying figures. Figures 1A, 1B, 1C show for better understanding the state of the art, while figure 2 illustrates several embodiments.
Figure 1A shows a diagram representing a change-initiated trap.
   Figure 1B shows a diagram for a keep alive mechanism.
   Figure 1C shows a diagram for a consistency check.
Figure 2 shows a diagram representing the data structure and the data exchange between a network element NE and a network manager NM for a synchronization procedure according to several inventive embodiments.

Figure 1A shows a diagram representing the information exchanged between an SNMP agent A and an SNMP manager M for a change-initiated trap 11. The SNMP agent A is comprised by a network element, while the SNMP manager M is comprised by a network manager M. When a change of a setting is detected in the SNMP agent A, a message is sent to the SNMP manager M. The SNMP manager M identifies the trap 11 and then sends an SNMP GET command 12 to the SNMP agent A in order to request the changed settings. The SNMP agent A then sends the requested information as a SNMP response 13 to the SNMP manager, which now can update its management information base. The trap 11, the SNMP GET command 12 and the SNMP response 13 are very frequent or involve transfer of much information between the network element and the network manager. In addition the network agent A needs to have a specific code attached to each internal change process that includes a trap formulate and send mechanism. The network manager M then needs to interpret one of a large number of possible traps and have specific code for each SNMP GET request needed.

Figure 1B shows a diagram representing the exchange of information between an SNMP agent A and an SNMP manager M for a keep-alive mechanism. In order to check if the SNMP agent is alive, the SNMP manager M periodically sends an SNMP-Ping 14 command to the SNMP agent A. The SNMP agent A responds with an SNMP acknowledge 15 if it is operating and connected properly.

Figure 1C shows a diagram representing the information exchanged between an SNMP agent A and an SNMP manager M for a consistency check. The SNMP manager M polls the SNMP agent A with a partial SNMP GET command 16 and as a consequence gets as an SNMP response 17 the requested data, namely a number of actual settings of the SNMP agent A. The SNMP manager then compares the response with its own cached information about the SNMP agent. If any differences are detected, the SNMP manager M requests with a SNMP GET command 18 a larger number of settings or a full record of settings of the SNMP agent A, in order to fully update its own management information base. As a consequence the SNMP agent A sends a response 19 to the SNMP manager M. This way it is possible to guarantee that the information stored in the SNMP manager M and the SNMP agent are consistent. However, this process requires a lot of data to be exchanged between the SNMP manager and the SNMP agent, especially for the Response 17 and the response 19. In addition, the data may be updated with a considerable delay, since the Manager cannot know when to initiate this process and thus does it periodically.

According to the present invention, figure 2 shows a diagram representing the data structure and the data exchange between a network element NE and a network manager NM for a synchronization procedure according to several embodiments. The network element NE comprises a SNMP agent A, while the network manager NM comprises a SNMP manager M. The SNMP agent A comprises a management information base MIB, means CALC for calculating a checksum CS and a checksum-memory CSM for storing the checksum CS. The management information base MIB comprises several tables T1, T2, T3. The tables T1, T2, T3 comprise a plurality of entries E11, E12, E13, E21, E22, E31, E32, E33.

The SNMP manager comprises calculator means CALC' for calculating a checksum CS', a checksum memory CSM' for storing the checksum CS' and a mirrored management information base MIB', which is mirrored to the management information base MIB. Therefore mirrored management information base MIB' comprises tables T1', T2', T3'. The tables T1', T2', T3' comprise a plurality of mirrored entries E11', E12', E13', E21', E22', E31', E32', E33'.

In a first embodiment the calculator means CALC calculate a checksum CS for all entries E11, E12, E13, E21, E22, E31, E32, E33 in the management information base MIB, while the calculator means CALC' calculate a checksum for all entries E11', E12', E13', E21', E22', E31', E32', E33' in the mirrored management information base MIB'. The checksum CS is stored in the checksum memory CSM, while the checksum CS' is stored in the checksum memory CSM'. The checksum CS is then transmitted to the network manager NM. The network manager compares the two checksums CS, CS'. In case the two checksums are different, the SNMP manager M updates its own mirrored management information base MIB'. The updating of the SNMP manager M can be performed by the transmitting the whole management information base MIB from the SNMP agent A to the SNMP manager M and overwriting the SNMP manager's management information base MIB'.

In a second embodiment, which is similar to the first embodiment, the checksums CS, CS' are not calculated for all entries in the management information bases MIB, MIB', but for a subset of entries, e.g. for all entries of table T1 and table T1'. This is especially advantageous for updating entries that are likely to be changed often.

In a third embodiment, which is similar to the first embodiment, the management information bases MIB, MIB' are split up into mirrored subsets of entries, e.g. each subset can be represented by one of the tables T1, T2, T3, T1', T2', T3'. For a subset a checksum CS, CS' is calculated. The checksums CS of the subsets of the network element's management information base are then transmitted to the network manager NM, where they are compared with the checksums CS' of their mirrored subsets. This can be done for one, several or all pairs of mirrored subsets. The subsets can be disjoint or comprise overlapping parts.

Instead of transmitting the whole plurality of entries that served as a basis for calculating the checksums CS, CS' for updating the SNMP manager M, it is also possible to involve partial checksums. This means that in case of unequal checksums CS, CS', the plurality of entries that served as a basis for calculating the checksums CS, CS' are split up into mirrored subsets. For each couple of mirrored subsets checksums are calculated and compared. In case the two checksums of a mirrored subset are not equal, the subset of entries is updated. This way the data traffic can be further reduced by creating a cascade of hierarchical checksums.

In variants of the first embodiment, the second embodiment and the third embodiment, the management information base MIB' does not need to be an exact copy of the management information base MIB. For example it is not necessary that the MIB' uses the same coding as the MIB' or the same database structure. In these variants the two management information bases MIB, MIB' comprise the same entries, but the entries are coded differently and/or the management information bases MIB, MIB' are structured differently.

In further variants of the first embodiment, the second embodiment and the third embodiment, the management information base MIB' does not even need to comprise all logical entries of the management information base MIB, but the two management information bases MIB, MIB' comprise each a plurality of logically identical entries. For each of the two pluralities of entries, checksums CS, CS' are calculated and compared.

A network element and/or a whole network does not necessarily need to be administrated by one single network manager. Different administration tasks can be performed by different network managers. A network managers' data memory comprises in this case the respective entries which are required to perform the tasks for which the network manager is responsible.

The inventive method can be initiated by a change in the SNMP agent's A management information base MIB or on a periodic or otherwise predetermined basis.

The SNMP agent A can use a trap 31 in order to transmit a checksum CS of the MIB or of a part of the MIB. In case of unequal checksums CS, CS', the SNMP manager can request with a get-command 32 the current entries of the MIB that served as the basis for the checksum or a partial checksum. In its response 33 the SNMP agent transmits the requested information, i.e. the entries or the partial checksums.

### Reference Signs

- A: SNMP agent
- CALC: means for calculating a checksum, calculator means
- CALC': means for calculating a checksum, calculator means
- CS: first checksum
- CS': second checksum
- CSM: checksum memory
- CSM': checksum memory
- E11, E12, E13, E21, E22, E31, E32, E33: entry in MIB
- E11', E12', E13', E21', E22', E31', E32', E33': entry in MIB'
- M: SNMP manager
- MIB: management information base, network element data memory
- MIB': mirrored management information base, network manager data memory
- NE: network element
- NM: network manager
- T1, T2, T3: table in MIB
- T1', T2', T3': table in MIB'
- 11: trap
- 12: SNMP GET command
- 13: SNMP response
- 14: SNMP-Ping
- 15: SNMP acknowledge
- 16: SNMP GET command
- 17:
- 31: trap
- 32: get command
- 33: response

## Claims

1. Method for synchronizing a network manager (NM) and a network element (NE),
the network element (NE) comprising a network element data memory (MIB),
the network element data memory (MIB) comprising a plurality of variable entries (E11, E12, E13, E21, E22, E31, E32, E33) representing a plurality of settings of the network element (NE),
the network manager (NM) comprising a network manager data memory (MIB'),
the network manager data memory (MIB') comprising a plurality of variable entries (E11', E12', E13', E21', E22', E31', E32', E33') for representing a logical copy of at least a subset of the plurality of variable entries (E11, E12, E13, E21, E22, E31, E32, E33) of the network-element data memory (MIB);
**characterized by** the steps of
a) calculating a first checksum (CS) for the subset of the plurality of entries (E11, E12, E13, E21, E22, E31, E32, E33) of the network element data memory (MIB);
b) calculating a second checksum (CS') for the subset of entries (E11', E12', E13', E21', E22', E31', E32', E33') representing the same settings as used for the first checksum (CS) ;
c) comparing the first checksum (CS) with the second checksum (CS');
d) updating the network manager data memory (MIB') with the entries used for the calculation of the first checksum (CS) in case the first checksum (CS) and the second checksum (CS') indicate a difference.

2. Method for synchronizing a network manager (NM) and a network element (NE),
the network element (NE) comprising a network element data memory (MIB),
the network element data memory (MIB) comprising a plurality of variable entries (E11, E12, E13, E21, E22, E31, E32, E33) representing a plurality of settings of the network element (NE),
the network manager (NM) comprising a network manager data memory (MIB'),
the network manager data memory (MIB') comprising a plurality of variable entries (E11', E12', E13', E21', E22', E31', E32', E33'), for representing a logical copy of at least a subset of the plurality of variable entries (E11, E12, E13, E21, E22, E31, E32, E33) of the network-element data memory (MIB);
**characterized by** the steps of
a) calculating a first checksum of at least a subset of the plurality of entries of the network element data memory (MIB) at a first time;
b) calculating a second checksum at a second time for the entries in the network element data memory that were used for calculating the first checksum;
c) comparing the first checksum with the second checksum;
d) updating the network manager data memory with the entries used for the calculation of the second checksum in case the first checksum and the second checksum indicate a difference.

3. Method according to claim 1 or 2,
**characterized in that**
before step a) the following steps are comprised:
a') calculating a first test checksum of at least a test subset of the plurality of entries of the network element data memory (MIB) at a first time;
b1') calculating a second test checksum for the entries in the network manager data memory (MIB'), representing the same settings as used for the first test checksum, or
b2') calculating a second test checksum at a second time for the entries in the network element data memory (MIB) that were used for calculating the first test checksum; and
c') comparing the first test checksum with the second test checksum.

4. The method of anyone of the preceding claims,
**characterized in that**
the method steps are performed periodically.

5. The method of anyone of the preceding claims,
**characterized by**
the first checksum (CS) or the first test checksum being a checksum for all entries in the network element data memory (MIB).

6. The method of anyone of the preceding claims
**characterized by**
the first checksum is encapsulated and transferred to the network manager in a SNMP data packet.

7. The method of any one of the preceding claims,
**characterized in that**
the network element (NE) comprises a SNMP agent (A) and the network manager (NM) comprises an SNMP manager (M), whereas the entries (E11, E12, E13, E21, E22, E31, E32, E33) that were used for calculating the first checksum (CS) and/or the entries (E11, E12, E13, E21, E22, E31, E32, E33) that were used for calculating the first test checksum are comprised in a management information base (MIB) of the SNMP agent (A).

8. The method of claim 7
**characterized in that**
the management information base (MIB) comprises a table (T1, T2, T3) or a group of tables and
the first checksum is calculated for the table or for a part of the table or the group of tables.

9. The method of claim 7 or 8
**characterized in that**
the SNMP agent comprises a trap (31) for sending the first checksum (CS) to the SNMP manager (M).

10. An apparatus with means suitable for performing one of the methods of the preceding claims.
